# EUROPÄISCHE PATENTANMELDUNG

(11) **EP 2 455 628 A1**
(43) Veröffentlichungstag der Anmeldung: **23.05.2012**
(21) Anmeldenummer: 11005623.1
(22) Anmeldetag: 08.07.2011
(51) Int. Cl.: F16C 11/06, F16J 3/04, F16J 15/52

(54) **Dichtungsbalg mit Spannvorrichtung**

(30) Priorität: 22.11.2010 DE 102010051875
(71) Anmelder: Carl Freudenberg KG, 69469 Weinheim (DE)
(72) Erfinder: Idies, Nedal, 12045 Berlin (DE)

(57) **Zusammenfassung**

Dichtungsbalg , der schlauchförmig ausgebildet ist und stimseitig zumindest einerseits einen durch eine Spannvorrichtung (1) an einem abzudichtenden Maschinenelement befestigbaren Dichtbereich (2) aufweist. Die Spannvorrichtung (1) ist durch eine Ringwendelfeder (3) gebildet.

## Beschreibung

### Technisches Gebiet

Die Erfindung betrifft einen Dichtungsbalg, der schlauchförmig ausgebildet ist und stimseitig zumindest einerseits einen durch eine Spannvorrichtung an einem abzudichtenden Maschinenelement befestigbaren Dichtbereich aufweist.

### Stand der Technik

Ein solcher Dichtungsbalg mit ist aus der DE 10 2006 039 861 A1 bekannt. Der Dichtungsbalg ist zur Abdichtung zweier relativ zueinander bewegbarer Bauteile vorgesehen und weist zwei zueinander beabstandete und durch einen Mantel des Dichtungsbalgs verbundene Dichtbereiche auf, in die jeweils eine Spannvorrichtung eingebettet ist. Die Spannvorrichtungen sind jeweils als ringförmig in sich geschlossene Metallringe ausgebildet und in den elastomeren Werkstoff des Dichtungsbalgs einvulkanisiert.

### Darstellung der Erfindung

Der Erfindung liegt die Aufgabe zugrunde, einen Dichtungsbalg der eingangs genannten Art derart weiterzuentwickeln, dass ein Reibmoment bei einer relativen Verdrehbarkeit zwischen dem abzudichtenden Maschinenelement und dem auf dem abzudichtenden Maschinenelement befestigten Dichtbereich, unabhängig von der Temperatur, die den Dichtungsbalg umgibt, im Wesentlichen konstant ist.

Diese Aufgabe wird erfindungsgemäß durch die Merkmale von Anspruch 1 gelöst. Auf vorteilhafte Ausgestaltungen nehmen die auf Anspruch 1 rückbezogenen Ansprüche Bezug.

Zur Lösung der Aufgabe ist es vorgesehen, dass die Spannvorrichtung durch eine Ringwendelfeder gebildet ist.

In sich geschlossene Metallringe, die als Spannvorrichtungen in , Dichtungsbälgen aus dem Stand der Technik zur Anwendung gelangen, haben den Nachteil, dass sie in radialer Richtung keine ausreichende elastische Nachgiebigkeit aufweisen. Das ist deshalb von Nachteil, weil viele Werkstoffe, aus denen die Dichtungsbälge und dadurch auch die Dichtungsbereiche bestehen, abhängig von der Umgebungstemperatur ihre elastische Nachgiebigkeit erneblich verändem. Sinkt z. B. die Umgebungstemperatur um den Dichtungsbalg, nimmt die elastische Nachgiebigkeit des Dichtungswerkstoffs ab und der Dichtbereich gleitet dadurch nicht mehr so reibungsarm über die abzudichtende Oberfläche des abzudichtenden Maschlnenelements wie bei höheren Temperaturen. Das ist unter anderem darauf zurückzuführen, dass sich der Werkstoff, aus dem der Dichtbereich besteht, mit der Oberflächenrauigkeit des abzudichtenden Maschinenelements generell verzahnt.

Bel vergleichsweise höheren Temperaturen und vergleichsweise größerer elastischer Nachgiebigkeit gleitet der Dichtbereich bei Relatiwerdrehung zur Oberfläche des abzudichtenden Maschinenelements vergleichsweise reibungsarm. Das Reibmoment bei Relatiwerdrehung des abzudichtenden Maschinenelements zum Dichtbereich ist vergleichsweise gering.

Sinkt demgegenüber die Temperatur, nimmt die elastische Nachgiebigkeit des Dichtbereichs ab. Bei einer Relatiwerdrehung des Dichtbereichs zum abzudichtenden Maschinenelement kann der Dichtbereich deshalb nicht mehr so reibungsarm wie bei höheren Temperaturen über die Rauigkeit des abzudichtenden Maschinenelements gleiten, wodurch sich das Reibmoment bei Relatiwerdrehung zwischen dem Dichtbereich und dem abzudichtenden Maschinenelement unerwünscht vergrößert

Um diesen unerwünschten Effekt, nämlich eine Erhöhung des Reibmoments zwischen dem Dichtbereich des Dichtungsbalgs und der Oberfläche des abzudichtenden Maschlnenelements bei niedrigen Temperaturen zu vermeiden, ist es bei dem erfindungsgemäßen Dichtungsbalg vorgesehen, dass die Spannvorrichtung durch eine Ringwendelfeder gebildet ist.

Hierbei ist von Vorteil, dass die Ringwendelfeder eine ausreichend große elastische Nachgiebigkeit in radialer Richtung aufweist und dadurch eine Temperaturkompensation bewirkt. Die sich bei niedrigen Temperaturen verringernde elastische Nachgiebigkeit des Werkstoffs des Dichtbereichs und das damit eigentlich einhergehende unerwünschte höhere Reibmoment wird dadurch kompensiert, dass sich die Ringwendelfeder in radialer Richtung elastisch aufdehnen kann, so dass der temperaturbedingt steifere Werkstoff über die Rauigkeit der abzudichtenden Oberfläche des Maschinenelements gleitet, wie bei höheren Temperaturen.

Für die beschriebene Temperaturkompensation ist es wichtig, dass die radiale Anpresskraft der Ringwendelfeder praktisch konstant ist, unabhängig davon, ob sie radial etwas stärker (bei niedrigeren Temperaturen) oder etwas weniger stark (bei höheren Temperaturen) aufgedehnt ist.

Das ist durch einen Metallring, wie aus dem Stand der Technik bekannt, nicht zu erreichen.

Die Radialkraft und damit das Reibmoment steigt bei niedrigen Temperaturen im Wesentlichen durch Kälteschrumpfung und den Anstieg des E-Moduls des Elastomers.

Die Ringwendelfeder sorgt dafür, dass der Dichtbereich die abzudichtende Fläche des abzudichtenden Maschinenelements unter weitgehend konstanter radialer Vorspannung dichtend umschließt, weitgehend unabhängig von der Umgebungstemperatur des Dichtungsbalgs.

Nach einer ersten Ausgestaltung kann es vorgesehen sein, dass der Dichtbereich von der Ringwendelfeder außenumfangsseitig umschlossen ist. Der Dichtbereich hat dazu bevorzugt eine radial nach außen offene umfangsseitig umlaufende Vertiefung, in der die Ringwendelfeder angeordnet ist. Durch die Anordnung der Ringwendelfeder in der Vertiefung ist diese dem Dichtbereich stets exakt in gleicher Weise und auch verliersicher zugeordnet.

Nach einer Ausgestaltung kann es vorgesehen sein, dass die Ringwendelfeder in den Dichtbereich eingebettet und vom Werkstoff, aus dem der Dichtbereich besteht, vollständig umschlossen ist. Hierbei ist von Vorteil, dass die Spannvorrichtung absolut verliersicher in den Dichtbereich integriert ist und dadurch auch die Gefahr von Montagefehlern bei der Herstellung des Dichtungsbalgs auf ein Minimum begrenzt ist. Außerdem ist die Ringwendelfeder keinen nachteiligen äußeren Einflüssen ausgesetzt. Ein separat aufzubringender Korrosionsschutz ist dadurch entbehrlich und auch eine Verschmutzung der Spannvorrichtung, die zu einer Funktionsbeeinträchtigung führen könnte, ist durch die Anordnung der Ringwendelfeder im Dichtbereich ausgeschlossen.

Der erfindungsgemäße Dichtungsbalg mit Ringwendelfeder weist insgesamt einen einfachen und teilearmen Aufbau auf und ist dadurch in konstruktiver und wirtschaftlicher Hinsicht einfach und kostengünstig herstellbar, Ringwendeifedern sind in vielen Abmessungen kostengünstig verfügbar.

Der Dichtbereich kann zumindest eine radial nach innen vorstehende Dichtlippe aufweisen. Diese Dichtlippe umschließt die abzudichtende Oberfläche des abzudichtenden Maschinenelements unter elastischer Vorspannung dichtend. Die Abdichtung erfolgt definiert durch die Dichtlippe.

Gelangt eine Dichtlippe zur Anwendung, ist von Vorteil, wenn die Dichtrippe radial außenseitig von der Ringwendelfeder umschlossen ist Die Ringwendetfeder wirkt dadurch unmittelbar auf die Dichtlippe.

Der Dichtbereich kann im Wesentlichen die Gestalt eines Radialwellendichtrings aufweisen. Auch Radialweliendichtringe haben häufig zumindest eine dynamisch beanspruchte Dichtlippe und eine Ringwendelfeder, wobei die Ringwendelfeder für die elastisch nachgiebige Anpressung der Dichtlippe radial an die abzudichtende Oberfläche sorgt.

Der Dichtbereich kann eine Staublippe umfassen, die der Dichtlippe auf der einem abzudichtenden Medium abgewandten Seite mit axialem Abstand benachbart zugeordnet ist. Die Verwendung einer solchen Staublippe ist insbesondere dann von Vorteil, wenn der erfindungsgemäße Dichtungsbalg zur Abdichtung von Kugelgelenken in Kraftfahrzeugen zur Anwendung gelangt. Bei einer solchen Verwendung Ist der Dichtungsbalg und damit auch der Dichtbereich Umgebungseinflüssen wie Staub, Feuchtigkeit und auch wechselnden Temperaturen ausgesetzt, so dass auch das Vorsehen einer Staublippe dazu beiträgt, dass der Dichtungsbalg gleichbleibend gute Gebrauchseigenschaften während einer langen Gebrauchsdauer aufweist. Verschleiß im Dichtbereich ist dadurch auch unter ungünstigen Umgebungsbedingungen auf ein Minimum begrenzt.

Der Dichtbereich kann einstückig ineinander übergehend mit dem Mantel des Dichtungsbalgs ausgebildet sein. Durch diese Materialeinheitlichkeit von Dichtbereich und Mantel ist der Dichtungsbalg mit Spannvorrichtung insgesamt einfach und kostengünstig herstellbar. Er hat einen teilearmen Aufbau und ist deshalb auch einfach montlerbar.

Der Dichtbereich und der Mantel können aus einem elastomeren Werkstoff bestehen. Derartige Werkstoffe sind für viele Anwendungsfälle gut geeignet und kostengünstig verfügbar.

Außerdem betrifft die Erfindung die Verwendung eines Dichtungsbalgs, wie zuvor beschrieben, zur Abdichtung von Kugelgelenken. Kugelgelenke, insbesondere für Fahrwerksaufhängungen und Lenkungen in Kraftfahrzeugen, müssen gegen das Eindringen von Schmutz und Feuchtigkeit geschützt sein, um eine geringe Wartungsintensität und eine hohe Lebensdauer des Kugelgelenks zu gewändeisten. Durch die häufig exponierte Lage der Kugelgelenke für Fahrwerksaufhängungen und Lenkungen in Kraftfahrzeugen sind die Kugelgelenke selbst und dadurch auch die Dichtungsbälge den unterschiedlichsten Umwelteinflüssen, zum Beispiel unterschiedlich hohen Temperaturen, praktisch unmittelbar ausgesetzt.

Der Dichtungsbalg ist während seiner Gebrauchsdauer auch unterschiedlich hohen Temperaturen ausgesetzt, wobei der Vorteil des erfindungsgemäßen Dichtungsbalgs in der als Ringwendelfeder ausgebildeten Spannvorrichtung zu sehen ist, weil eine derartige Ringwendelfeder dafür sorgt, dass die Gebrauchseigenschaften des Dichtungsbalgs unabhängig von der Temperatur, die den Dichtungsbalg umgibt, stets im Wesentlichen gleich ist, insbesondere in Bezug auf das auftretende Reibmoment bei einer Relativbewegung des Dichtbereichs zum abzudichtenden Maschinenelement.

### Kurzbeschreibung der Zeichnung

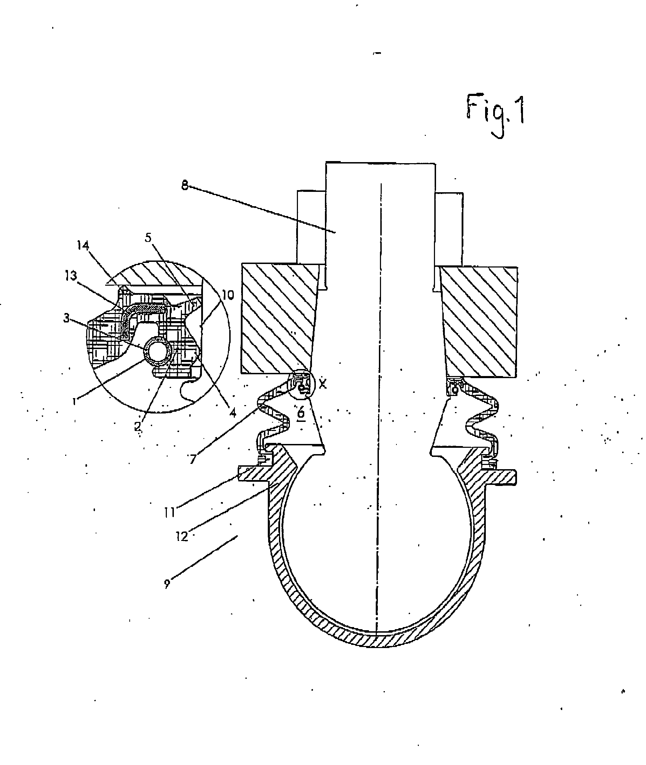

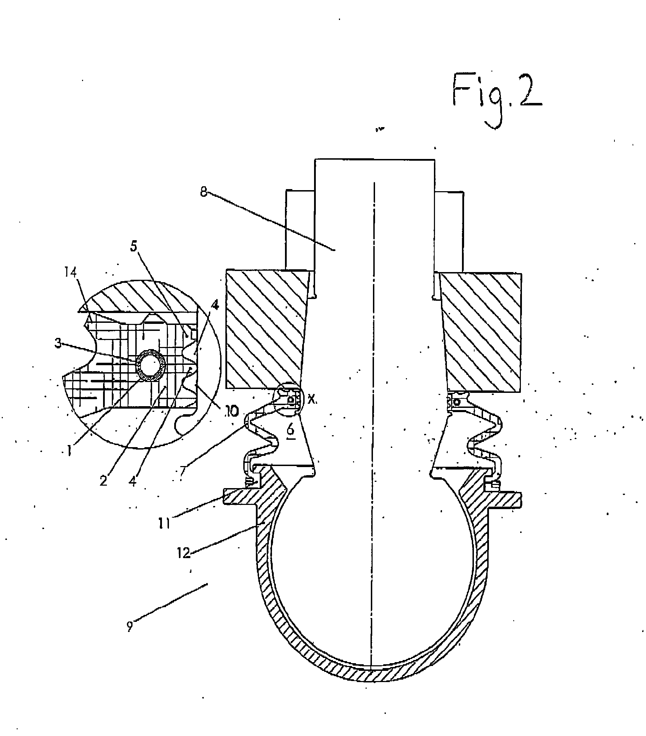

Zwei Ausführungsbeispiele des erfindungsgemäßen Dichtungsbalgs mit Spannvorrichtung werden nachfolgend anhand der Figuren 1 und 2 näher eriäutert. Diese zeigen jeweils in schematischer Darstellung:
Fig, 1 ein erstes Ausführungsbeispiel bei dem eine als Ringwendelfeder ausgebildete Spannvorrichtung den Dichtbereich außenumfangsseitig umschließt,
Fig. 2 ein zweites Ausführungsbeispiel, bei dem eine. Ringwendelfeder in den Dichtbereich eingebettet und vom Werkstoff, aus dem der Dichtbereich besteht, vollständig umschlossen ist.

### Ausführung der Erfindung

In den Fig. 1 und 2 ist jeweils ein Ausführungsbeispiel des erfindungsgemäßen Dichtungsbalgs mit einer Spannvorrichtung 1 gezeigt, wobei der Dichtungsbaig einschließlich Dichtbereich 2 und. Mantel 7 aus einem elastomeren Werkstoff besteht. Die Spannvorrichtung 1 ist erfindungsgemäß als Ringwendelfeder 3 ausgebildet.

Verwendung finden die in den Fig. 1 und 2 gezeigten Dichtungsbälge zur Abdichtung von Kugelgelenken in Kraftfahrzeugen, insbesondere für Fahrwerksaufhängungen und Lenkungen.

Das abzudichtende Maschinenelement besteht aus einem metallischen Werkstoffe und ist durch den Zapfen 8 eines Kugelgelenks 9 gebildet, wobei der durch die Ringwendelfeder 3 an die abzudichtende Oberfläche 10 dichtend angepresste Dichtbereich 2 relativ zu dem Zapfen 8 verdrehbar ist; diese dynamische Abdichtung ist demnach reibungsbehaftet.

Auf der axial vom Dichtbereich 2 abgewandten Stirnseite ist der weitere Dichtbereich 11 durch eine Klemmvorrichtung relativ ortsfest und dicht mit dem Gehäuse 12 des Kugelgelenks verbunden; hier handelt es sich um eine statische Abdichtung. Die Klemmvorrichtung ist durch einen Flachdraht gebildet.

Der Mantel 7 hat die Form eines Faltenbalgs, erstreckt sich in axialer Richtung und verbindet den Dichtbereich 2 mit dem weiteren Dichtbereich 11.

Mit abnehmender Umgebungstemperatur um den Dichtungsbalg sinkt auch die Elastizität des elastomeren Werkstoffs, aus dem der Dichtungsbalg besteht. Um diese sinkende Elastizität und das dadurch größer werdende Reibmoment bei Relatiwerdrehung des Dichtbereichs 2 relativ zur abdichtenden Oberfläche 10 zu kompensieren, ist die in radialer Richtung elastisch nachgiebige Ringwendelfeder 3 vorgesehen. Durch sie wird ermöglicht, dass sich der Durchmesser des Dichtbereichs 2 in radialer.Richtung, abhängig von der Umgebungstemperatur und der daraus resultierenden elastischen Nachgiebigkeit des elastomeren Werkstoffs, elastisch nachgiebig verhält. Eine Aufweitung erfolgt dadurch, dass bei tiefen Temperaturen und damit einhergehender geringer Elastizität des elastomeren Werkstoffs, aus dem der Dichtbereich besteht, der Dichtbereich 2 in radialer Richtung selbsttätig elastisch aufgeweitet wird, wenn sich der Dichtbereich 2 über die herstellungsbedingte Rauigkeit der abzudichtenden Oberfläche 10 bewegt. Bei höheren Temperaturen und damit größere Elastizität des elastomere Werkstoffs, zieht sich die Ringwendelfeder radial zusammen; das Reibmoment ist, praktisch unabhängig von der Temperatur, die den Dichtungsbalg umgibt, konstant.

ln Fig. 1 ist das erste Ausführungsbeispiel eines erfindungsgemäßen Dichtungsbalgs mit Spannvorrichtung 1 gezeigt. Der Dichtbereich 2 ist von der Ringwendelfeder 3 außenumfangsseitig umschlossen, wobei die Ringwendelfeder 3 in einer kongruent gestalteten, in radialer Richtung nach außen offenen und umfangsseitig umlaufenden Ausnehmung des Dichtbereichs 2 angeordnet ist.

Wie bei einem Radialwellendichtring.weist der Dichtbereich eine radial nach innen vorstehende Dichtlippe 4 auf, die die abzudichtende Oberfläche 10 dichtend umschließt. Auf der dem abzudichtenden Medium 6 axial abgewandten Seite der Dichtlippe 4 ist die Staublippe 5 angeordnet

In dem hier gezeigten Ausführungsbeispiel ist der Dichtbereich 2 mit einer Armierung 13 versehen. Die Armierung 13 ist durch ein ringförmiges Winkelblech gebildet.

In Fig. 2 ist ein weiteres Ausführungsbeispiel eines Dichtungsbalgs mit Spannvorrichtung 1 gezeigt. Die Ringwendelfeder 3 ist in den Dichtbereich 2 eingebettet und vom elastomeren Werkstoff, aus dem der Dichtbereich 2 besteht, vollständig umschlossen.

Im Gegensatz zum Ausführungsbeispiel aus Fig. 1 weist der Dichtbereich 2 im Ausführungsbeispiel aus Fig. 2 mehrere dynamisch beanspruchte Dichtlippen 4 auf.

Um das Kugelgelenk noch besser vor Verunreinigungen wie Staub und Feuchtigkeit von außen zu schützen, ist die äußere Dichtlippe 14 vorgesehen.

## Patentansprüche

1. Dichtungsbalg, der schlauchförmig ausgebildet ist und stirnseitig zumindest einerseits einen durch eine .Spannvorrichtung (1) an einem abzudichtenden Maschinenelement befestigbaren Dichtbereich (2) aufweist, **dadurch gekennzeichnet, dass** die Spannvorrichtung (1) durch eine Ringwendelfeder (3) gebildet ist.

2. Dichtungsbalg nach Anspruch 1, **dadurch gekennzeichnet, dass** der Dichtbereich (2) von der Ringwendelfeder (3) aussenumfangsseitig umschlossen ist.

3. Dichtungsbalg nach Anspruch 1, **dadurch gekennzeichnet, dass** die Ringwendelfeder (3) in den Dichtbereich (2) eingebettet und vom Werkstoff, aus dem der Dichtbereich (2) besteht vollständig umschlossen ist.

4. Dichtungsbalg nach einem der Ansprüche 1 bis 3, **dadurch gekennzeichnet, dass** der Dichtbereich (2) zumindest eine radial nach innen vorstehende Dichtlippe (4) aufweist.

5. Dichtungsbalg nach Anspruch 4, **dadurch gekennzeichnet, dass** die Dichtlippe (4) radial außenseitig von der Ringwendelfeder (3) umschlossen ist.

6. Dichtungsbalg nach einem der Ansprüche 1 bis 5, **dadurch gekennzeichnet, dass** der Dichtbereich (2) im Wesentlichen die Gestalt eines Radialwellendlchtrings aufweist.

7. Dichtungsbalg nach einem der Ansprüche 1 bis 6, **dadurch gekennzeichnet, dass** der Dichtbereich (2) eine Staublippe (5) umfasst, die der Dichtlippe (4) auf der einem abzudichtenden Medium (6) abgewandten Seite mit axialem Abstand benachbart zugeordnet ist.

8. Dichtungsbalg nach einem der Ansprüche 1 bis 7, **dadurch gekennzeichnet, dass** die Dichtlippe (4) einstückig ineinander übergehend mit einem Mantel (7) des Dichtungsbalgs ausgebildet ist.

9. Dichtungsbalg nach einem der Ansprüche 1 bis 8, **dadurch gekennzeichnet, dass** die Dichtlippe (4) und der Mantel (7) aus einem elastomeren Werkstoff bestehen.

10. Verwendung eines Dichtungsbalgs nach einem der Ansprüche 1 bis 9 zur Abdichtung von Kugelgelenken.
